# EUROPEAN PATENT APPLICATION

(11) **EP 4 530 417 A1**
(43) Date of publication of application: **02.04.2025**
(21) Application number: 24202998.1
(22) Date of filing: 26.09.2024
(51) Int. Cl.: E04B 9/20, F16B 1/00, F16B 13/04

(54) **FASTENING SYSTEM FOR A DOVETAIL GROOVE**

(30) Priority: 27.09.2023 BE 202305799
(71) Applicant: CDM Stravitec NV, 3090 Overijse (BE)
(72) Inventor: Verbraeken, Karolien, 3090 Overijse (BE)
(74) Representative: Callewaert, Raf

(57) **Abstract**

Fastening system with a spring clamp (11) and a latch (23), for fastening elements (33) in a dovetail groove (22), wherein the spring clamp (11) includes a curved plate (1) having a concave side (2) and a convex side (3) and with two ends (4, 5) provided to abut against opposite standing walls (6, 7) of the dovetail groove (22), wherein the latch (23) is provided with a first part (9) extending on the concave side (3) of the curved plate (1) and a second part (8) extending on the convex side (2) of the curved plate (1), wherein the first part (9) and the second part (8) are movable relative to each other and can move towards each other to clamp the curved plate (1) between them and thereby reduce a curvature of the curved plate (1) between the two ends (4, 5) and increase the distance (10) between the two ends (4, 5) to lock the spring clamp (11) in de dovetail groove (22).

## Description

The invention relates to a fastening system with a spring clamp, in particular for fastening elements in a dovetail groove of, for example, a dovetail plate.

The spring clamp comprises a curved plate with a concave side and a convex side and two ends with a curvature between these ends. The ends are provided so as to abut against opposite standing walls of the dovetail groove. Furthermore, a latch is provided to lock the spring clamp in the dovetail groove.

The system is intended for fastening one or several elements in a dovetail groove or recess in a substrate, such as a ceiling, wall, floor or other structural element.

In general, a dovetail groove is a groove with a base and standing walls tapering towards each other, so that the base is wider than an opposite opening. Preferably, the walls gradually taper towards each other. By dovetail groove should also be understood more generally a recess with walls tapering towards each other, wherein the opening is narrower than the base of this recess.

The elements to be fastened by means of this system may consist of, for example, components of a ceiling covering, wherein the fastening system then forms a ceiling hanger. The fastening system may serve for fixing elements to a ceiling and may also serve for fixing elements to a wall or in a floor.

The invention also relates to a method for fastening such a fastening system with a spring clamp in a dovetail groove, wherein the spring clamp is placed with the two ends of the curved plate in the dovetail groove between the two opposite standing walls.

By elastic compression of the spring clamp should be generally understood the elastic deformation of the spring clamp, for example by applying a compressive force, after which this spring clamp can resume its original shape when the compressive force is no longer applied. When latching, the movement of the spring clamp is further, preferably, restricted, prevented and/or blocked so that the clamp cannot be removed from the groove or recess.

A curved plate or an arc generally exhibits a curvature. The curvature of the curved plate or the arc is thereby the degree to which the plate or the arc, respectively, deviates from a flat plate or a straight line, respectively. The curvature of a circular arc with a certain length thus decreases as the circle on which it is located increases. The corresponding central angle of the circular arc with this certain length thereby also decreases.

According to the current state of the art, various suspension systems are used in which fasteners are clamped and/or locked in the dovetail groove or recess.

For example, patent documents JPH05222793A, JPH10325206A and JP2002054262A describe fastening systems in which free ends of a U-shaped clamp or folded plate are clamped in a dovetail groove of a dovetail plate by means of a bolt onto which further elements are attached. JPH06129051A describes a similar system where the bolt can be more easily inserted between the free ends.

JPH03111714U and JP2010248843A describe a fastening system with a curved or folded plate with two ends that snap into recesses in the walls of a groove. JP2002129695A describes a rather complex fastening system with a threaded rod and hinged wings whose ends are clamped between recesses in the walls of the groove. Furthermore, WO2017175659A1 and GB2252806A describe a widening element that is inserted between the lateral wings of a plug-shaped or U-shaped element by tightening a threaded rod that meshes with this widening element. Thus, the wings are moved away from each other and pushed up against the walls of the groove to clamp the fastener into it.

These existing fastening systems are disadvantageous in that they often have a rather high installation height and are sometimes quite complex. Furthermore, these fastening systems are always specifically designed for a particular shape and/or size of groove. Thus, the same system cannot be used for grooves of different sizes and/or widths.

The invention aims to remedy these disadvantages by proposing a simple and compact fastening system to be provided in a dovetail groove that can be used with great flexibility for grooves of different sizes and/or widths. Furthermore, the invention also aims to propose a method for fastening elements in a dovetail groove or recess in which the above-mentioned disadvantages are remedied.

To this end, the invention proposes a fastening system with a spring clamp wherein the latch is provided with a first part extending on the concave side of the curved plate and a second part extending on the convex side of the curved plate, wherein the first part and the second part are movable relative to each other and can move towards each other to clamp the curved plate in between them, thereby reducing the curvature of the curved plate and increasing the distance between the two ends, as claimed in the claims appended hereto.

Practically, the first part includes a clamping plate on the concave side extending between the ends of the curved plate.

Advantageously, the clamping plate has two ends extending at a distance from each other and abutting against the concave side of the curved plate, the ends of the curved plate extending at a distance from each other that is greater than the distance between the ends of the clamping plate.

In a very advantageous manner, the curved plate has a cross-section transverse to its ends, wherein this cross-section forms an arc between these ends with a fixed arc length and a variable curvature, the curvature being between the curvature of a circular arc having the arc length and a central angle of 30°, preferably, 30° to 60°, and the curvature of a circular arc having the arc length and a central angle of 270°, preferably, 180° to 270°.

The cross-section may thereby form a circular arc with a central angle of 30° to 270°, preferably 60° to 270°, in particular 90° to 180°, very specifically 120° to 180°.

Preferably, the curved plate can undergo an elastic deformation between the latter.

Preferably, changing and/or reducing the curvature of the curved plate is done elastically within the range of the variable curvature. As such, preferably, the curved plate takes again its original shape after the first part and the second part of the latch are moved away from each other and the curved plate is not clamped anymore between them.

In one possible manner, the curved plate is made of spring steel.

In a highly advantageous manner, the ends of the curved plate have a raised edge. Preferably, the raised edge at least partly encloses the clamping plate.

In a particular manner, the curved plate and the clamping plate each have a rigidity, wherein the rigidity of the clamping plate is higher than the rigidity of the curved plate.

In a special manner, the clamping plate has a curvature that is opposite to the curvature of the curved plate.

Furthermore, the first part and/or the second part preferably contains a nut provided on a bolt that extends through the clamping plate and the curved plate.

The bolt may have an angular collar that fits into an angular recess in the clamping plate and/or into a recess in the curved plate.

In an interesting manner, a spacer extends between the first part and the second part and, preferably, between the first part and the curved plate.

Preferably, the fastening system is provided to extend into this groove with the concave side of the curved plate facing a base of the dovetail groove.

The latch on the convex side of the curved plate may be provided with fasteners to attach the elements, in particular, a recess, an internal or external thread, a tooth, a hook, a flange, a ring and/or an eye.

The bolt may have an angular collar that fits into an angular recess in the clamping plate and/or into a recess in the curved plate.

In an interesting manner, a spacer extends between the first part and the second part and, preferably, between the first part and the curved plate.

Preferably, the fastening system is provided to extend into this groove with the concave side of the curved plate facing a base of the dovetail groove.

Possibly, the latch on the convex side of the curved plate is provided with fasteners to attach the elements, in particular, a recess, an internal or external thread, a tooth, a hook, a flange, a ring and/or an eye.

The invention further also relates to a method for fixing a fastening system in which, after it has been placed with the spring clamp in the dovetail groove, the spring clamp is elastically compressed by moving the first part and the second part of the latch on either side of the curved plate towards each other and by clamping the curved plate between them, thereby reducing the curvature of the curved plate and increasing the distance between the two ends, until the two ends abut against the opposite standing walls to lock the spring clamp into the dovetail groove.

Preferably, according to this method, the spring clamp is placed in the dovetail groove with the concave side of the curved plate facing the base of the dovetail groove and with the convex side of the curved plate facing the opening of the dovetail groove.

Advantageously, in order to lock the spring clamp in the dovetail groove, the two ends abut against the opposite standing walls of the dovetail groove with the convex side of the curved plate against the standing walls.

Preferably, the first part and the second part of the latch on either side of the curved plate are moved towards each other by tightening a nut of the second part extending on a bolt on the convex side of the curved plate, wherein the bolt extends through the curved plate at least from the first part to the second part, wherein the nut is tightened towards a clamping plate of the second part extending on the bolt on the concave side of the curved plate.

Other particularities and advantages of the invention will become clear from the following description of practical embodiments of the fastening system with spring clamp and the method according to the invention; this description is given as an example only and does not limit the scope of the protection claimed in any way; the reference numerals used hereafter refer to the appended figures.
Figure 1 is a schematic side view of a fastening system according to a first embodiment of the invention, with the spring clamp loose in a groove.
Figure 2 is a schematic view of the fastening system as in Figure 1, with the spring clamp locked in the groove.
Figure 3 is a schematic side view of a fastening system according to a third embodiment of the invention.
Figure 4 is a schematic side view of a fastening system according to a fourth embodiment of the invention.

In the different figures, the same reference numerals refer to the same or analogous elements.

The invention generally relates to a fastening system with a spring clamp and a latch for fastening elements in a dovetail groove or recess. According to the invention, the spring clamp containing a curved plate is placed in the groove and then clamped and locked in the groove by means of the latch. In doing so, the curvature of the curved plate is reduced until the ends of the curved plate fit closely against the standing walls of the groove or recess. When clamping the curved plate, the distance between these ends is increased in order to lock the spring clamp into the groove. The latch herein includes an elongated element extending transversely to the curved plate and onto which further elements to be fixed can be attached. The latch contains at least a first and a second part, each extending on one side of the curved plate and in between which said plate is clamped and also stressed by moving the parts towards each other.

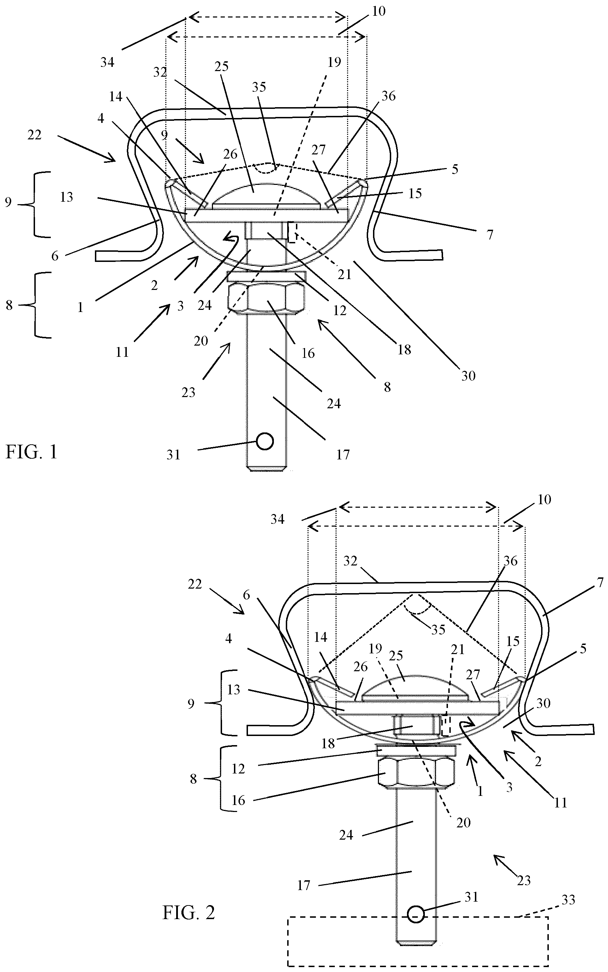

The fastening system according to a first embodiment, as shown in Figures 1 and 2, comprises a spring clamp 11 consisting of a curved plate 1 having a concave side 3 and a convex side 2. The fastening system in this embodiment is positioned with the spring clamp 11 in the dovetail groove 22 with the concave side 3 of the curved plate 1 facing the base 32 of the dovetail groove 22, and with the convex side 2 of the curved plate 1 facing the opening 30 of the dovetail groove 22.

In this embodiment, the curved plate 1 is rectangular and has two ends 4 and 5 that are parallel to each other. Between these ends 4 and 5, the plate 1 is curved. In this embodiment, the ends 4 and 5 are preferably formed by a fold and raised edges 14 and 15 facing the concave side 3. The ends 4 and 5 are provided so as to each abut with the convex side 2 of the plate 1 against one of the standing walls 6 or 7 of the groove 22. The raised edges 14 and 15 of the ends 4 and 5 are thereby turned away from the standing wall 6 or 7 connected thereto.

The curved plate 1 is preferably elastically deformable and may be formed, for example, of spring steel.

The fastening system further comprises a latch 23 formed by, among other things, an elongated element such as a bolt 17 extending transversely through the curved plate 1. According to this embodiment, the bolt 17 forms a latch bolt having a convex head 25 and an angular collar 18 at a first end and a thread 24 at a second end. In this first embodiment, the first end with the convex head 25 extends on the concave side 3 of the curved plate 1 while the second end with the thread 24 extends mainly on the convex side 2 of the curved plate 1.

The latch 23 includes at its first end a first part 9 extending on the concave side 3 of the curved plate 1 and at its second end a second part 8 extending on the convex side 2 of the curved plate 1. The first part 9 and the second part 8 are movable with respect to each other and can move towards each other to clamp and/or stress the curved plate 1 between them. The curvature of the curved plate 1 is thereby reduced and the distance 10 between the two ends 4 and 5 is increased. Preferably, the deformation of the curved plate 1 is elastic.

According to this embodiment, the first part 9 comprises a clamping plate 13 forming a relatively rigid flat plate extending between the ends 4 and 5 of the curved plate 1. The clamping plate 13 therefore preferably has a higher rigidity than the curved plate 1. Preferably, the clamping plate 13 abuts with two ends 26 and 27 against the curved plate 1 between the ends 4 and 5 of said curved plate 1. The clamping plate 13 is preferably rectangular, with parallel ends 26 and 27. The raised edges 14 and 15 in this first embodiment at least partly enclose the ends 26 and 27 of the clamping plate 13. The ends 26 and 27 of the clamping plate 13 therefore extend at a distance 34 from each other which is smaller than the distance 10 between the ends 4 and 5 of the curved plate 1.

The distance 34 between the ends 26 and 27 of the clamping plate 13 is such that the latter fits into the groove 22 between the standing walls 6 and 7. Preferably, the clamping plate 13 is parallel to the base 32 and/or the opening 30 of the groove 22. This distance 34 may be larger or smaller than the width of the opening 30 of the groove 22. If the distance 34 is larger than the width of the opening 30, then the spring clamp 11 is inserted tilted through the opening 30 into the groove 22.

The distance 10 between the ends 4 and 5 of the curved plate 1 before this plate 1 is being clamped is also sufficiently small, such that the spring clamp 11 can be inserted into the groove 22 through the opening 30. Possibly, for this purpose, the spring clamp 11 may also be inserted tilted into this groove 22 when, for example, the distance 10 is larger than the width of the opening 30.

The second part 8 of the latch 23 contains a nut 16 and a washer 12. The nut 16 has an internal thread that fits onto the thread 24 of the bolt 17. By tightening the nut 16, it is moved over the thread 24 towards the first part 9 including the clamping plate 13 of the latch 23. The washer 12 is located around the bolt 17 between the nut 16 and the curved plate 1 and follows the movement of the nut 16. When the nut 16 is loosened, the nut 16 is moved away from the first part 9.

Thus, when the nut 16 is tightened, the first part 9 and the second part 8 of the latch 23 are moved towards each other and the curved plate 1 is clamped between these parts 9 and 8 and thus between the nut 16 with the washer 12 and the ends 26 and 27 of the clamping plate 13. Relative to the curved plate 1, the clamping plate 13 preferably exhibits a relatively high rigidity. Clamping then compresses and deforms the curved plate 1, this deformation being preferably elastic. The curvature of the curved plate 1 thereby decreases so that the distance 10 between the two ends 4 and 5 of the plate 1 increases. Then, when the fastener is located in a groove 22, the ends 4 and 5 will move away from each other until they abut with the convex side 2 of the plate 1 against the standing walls 6 and 7 of the groove 22, as shown in Figure 2. The degree of compression and deformation of the curved plate 1 is hereby adapted to the width of the groove 22.

Preferably, the curved plate 1 according to this first embodiment has a cross-section transverse to the ends 4 and 5 forming an arc of a circle between these ends 4 and 5. This circular arc has a fixed arc length, and its curvature is determined by the central angle 35 on which the circular arc is located and the radius 36 of the circle. The central angle 35 may thereby be 30° to 270°, possibly 60° to 270°, preferably 90° to 180°, and in particular 120° to 180°. When the curvature of the curved plate 1 decreases while stressing the plate 1, the radius 36 of the circle increases and the central angle 35 decreases, as shown in Figures 1 and 2. The arc length of the circular arc remains unchanged in this regard, of course. Such curvatures allow easy insertion of the fastener into the groove 22 and, when stressing the curved plate 1, to make the convex side 2 abut with its ends 4 and 5 against the walls 6 and 7 of this groove 22. When the plate 1 is inserted into the groove 22, it is preferably strongly curved and the central angle 35 is, for example, 120° to 270°. When the plate 1 is clamped in the groove, its curvature is smaller and the central angle 35 is, for example, preferably 30° to 120° or possibly 60° to 90°. Of course, the cross-section may also take other curved shapes with similar curvatures, such as a parabolic arch, an elliptical arch or a basket arch. The curvature of the arc may possibly vary depending on the position on the arc and/or depending on the compression of the curved plate 1. The curvature may thus, for example, correspond to curvatures of circular arcs with the arc length and with central angles 35 ranging from 10° to 270°. However, the curvature is preferably always situated between the curvature of a circular arc having the same arc length and with the corresponding central angle 35 that is 30°, preferably 30° to 60°, and the curvature of a circular arc having the same arc length as well and with the corresponding central angle 35 that is 270°, preferably 180° to 270°. Preferably, the curved plate 1 undergoes an elastic deformation in between these.

The bolt 17 is preferably provided with the angular collar 18 under the head 25, which fits into a corresponding angular recess 19 of the clamping plate 13. This prevents the bolt 17 and the clamping plate 13 from rotating relative to each other. Since the clamping plate 13 rests with its ends 26 and 27 against the curved plate 1, this plate 1 will not rotate with respect to said clamping plate 13 either. Consequently, the nut 16 can then be easily tightened without the bolt 17, the clamping plate 13 and/or the curved plate 1 rotating along.

Providing the angular collar 18 and the corresponding angular recess 19 of the clamping plate 13 are not necessary measures since the bolt 17 may also be prevented from rotating along with the nut 16 by other means. For example, the head 25 may possibly be locked, for example, by providing a hexagonal head, a wing nut, a wing head or a cap nut, or the bolt 17 may be locked at the opposite end, for example, by providing a screw head or cap nut.

Optionally, a spacer 21 may also be provided at the latch 23, such as, for example, a raised tooth on the clamping plate 13 or a wide collar 18 that can rest on the curved plate 1 and prevents the first part 9 and the second part 8 from being brought too close to each other and thus deforming the curved plate 1 too much. Possibly, this spacer 21 may also be formed by a raised fold in the curved plate 1 and/or in the clamping plate 13, not shown in the figures.

The screw thread 24 can be used for further fastening elements 33 to the fastening system. In addition, other fastening means 31 may be provided for this purpose, such as a recess, an internal or external thread, a tooth, a hook, a flange, a ring and/or an eye.

The various components of the fastening system may be manufactured from materials known as such to the person skilled in the art, such as, for example, galvanised steel or stainless steel. Depending on the application, plastics could possibly also be used at least in part for this purpose.

A variant embodiment, not shown in the figures, differs from the first embodiment in that the ends 4 and 5 of the curved plate 1 are provided with raised edges 14 and 15 facing the convex side 2. The raised edges 14 and 15 of the ends 4 and 5 are provided so as to each abut against one of the standing walls 6 and 7 of the groove 22. Thus, the raised edges 14 and 15 of the ends 4 and 5 are turned towards the connecting standing wall 6 or 7 when the fastening system is situated with the curved plate 1 in the groove 22.

In another variant embodiment, not shown in the figures, no raised edges are provided at the ends of the curved plate.

A second embodiment, not shown in the figures, differs from the first embodiment in that the clamping plate is formed by an inversely curved plate with a curvature that is opposite to the curvature of the curved plate. This plate can be relatively rigid with respect to the curved plate, or it can exhibit a similar elastic deformability.

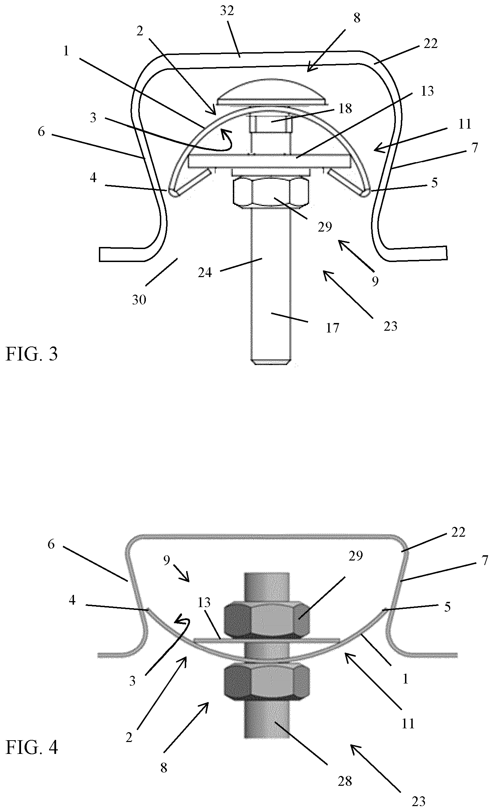

A third embodiment, shown in Figure 3, differs from the first embodiment in that when the fastening system is placed in the groove 22, the concave side 3 faces the opening 30 and the convex side 2 faces the base 32 of the groove 22. However, depending on the shape of the dovetail groove 22, the first embodiment may be more stable and/or easier to fasten due to, for example, the larger contact surface between the ends 4 and 5 of the curved plate 1 and the walls 6 and 7 of the groove 22. Furthermore, the shape of the fold and the ends 4 and 5 may be adapted to the shape of the walls 6 and 7 of the groove 22.

A fourth embodiment, shown in Figure 3, differs from the first embodiment in that the latch 23 includes a threaded rod 28 instead of a bolt 17. Furthermore, the first part 9 of the latch 23 includes an additional nut 29 in addition to the clamping plate 13. This nut 29 may possibly be fixed to or integrated in the clamping plate 13.

In a variant of this fourth embodiment, the clamping plate 13 may also possibly be provided with an internal thread that cooperates with the threaded rod 28.

A fifth embodiment, not shown in the figures, differs from the first embodiment in that the latch comprises a rod that extends at least from the first part of the latch on the concave side of the curved plate to the second part of the latch on the convex side of the plate. The first part of the latch on the concave side of the curved plate comprises a clamping plate that is fixed to the rod. The second part of the latch comprises a clamping ring around the rod that can move over this rod on the convex side of the curved plate. The rod is provided with one or more teeth that can interlock with the clamping ring or on a tooth of the clamping ring. Such a tooth can be formed by a recess, such as a notch in the rod and/or the clamping ring, and/or by a raised projection on the rod and/or the clamping ring. In this way, the curved plate can be clamped between the clamping plate and the clamping ring by moving the clamping ring towards the clamping plate and snapping it over the one or more teeth. According to this fifth embodiment, the rod may also be additionally threaded or provided with other means described above.

In a variant of this fifth embodiment, the latch may comprise a round or polygonal rod with possibly a smooth surface. In this case, the first and/or second part of the latch comprises a clamping ring that contains flaps, teeth and/or ribs that serve as barbs and can interlock with the rod.

A sixth embodiment, not shown in the figures, differs from the first embodiment in that the latch comprises a bolt and a clamping plate wherein the head of the bolt and the clamping plate are not provided with a collar and a suitable recess, such that they can rotate relative to each other. Optionally, an additional ring is provided between the head of the bolt and the clamping plate. The first part of the latch extending on the concave side of the curved plate is thus formed by the clamping plate, possibly with the ring and/or also the head of the bolt. The second part of the bolt extending on the convex side of the curved plate is formed in this case by a recess with internal thread in the curved plate or possibly by a nut fixed to the curved plate. The bolt thereby extends with an external thread through the recess with internal thread and/or the fixed nut and works together with the latter to move the first part and the second part of the latch relative to each other when the bolt is rotated and to clamp the curved plate between them when they are moved towards each other. In order to rotate the bolt, it may have, for example, a recess, a collar, a screw head and/or a lock nut on the convex side of the curved plate.

Of course, the invention is not limited to the methods described above and the embodiments shown in the accompanying figures. Thus, the various features of these embodiments can also be combined among themselves.

For example, the curved plate and/or the clamping plate are not necessarily rectangular in shape but may also have the shape of a disk, an ellipse, a rhombus, a trapezium or a parallelogram, for example.

Thus, the first part or the second part of the latch may be fixed to a bolt, threaded rod or bar of the latch extending through the curved plate, preferably transversely to the latter.

## Claims

1. Fastening system with a spring clamp (11), in particular for fastening elements (33) in a dovetail groove (22),
wherein the spring clamp (11) includes a curved plate (1) having a concave side (2) and a convex side (3), with two ends (4, 5) provided to abut against opposite standing walls (6, 7) of the dovetail groove (22), and having a curvature between said two ends (4, 5),
wherein a latch (23) is provided to lock the spring clamp (11) in de dovetail groove (22),
**characterised in that** the latch (23) is provided with a first part (9) extending on the concave side (3) of the curved plate (1) and a second part (8) extending on the convex side (2) of the curved plate (1),
wherein the first part (9) and the second part (8) are movable relative to each other and can move towards each other to clamp the curved plate (1) between them and thereby reduce the curvature of the curved plate (1) and increase the distance (10) between the two ends (4, 5).

2. Fastening system according to claim 1, wherein the first part (9) comprises a clamping plate (13) extending between the ends (4, 5) of the curved plate (1).

3. Fastening system according to claim 2, wherein the clamping plate (13) has two ends (26, 27) extending at a distance (34) from each other and abutting against the concave side (2) of the curved plate (1), wherein the ends (4, 5) of the curved plate (1) extend at a distance (10) from each other that is greater than the distance (34) between the ends (26, 27) of the clamping plate (13).

4. Fastening system according to any one of claims 1 to 3, wherein the curved plate (1) has a cross-section transverse to the ends (4, 5), said cross-section forming an arc between said ends (4, 5) having a fixed arc length and a variable curvature, said curvature being situated between the curvature of a circular arc with the arc length and witch a central angle of (35) of 30°, preferably 30° to 60°, and the curvature of a circular arc with the arc length and with a central angle (35) of 270°, preferably 180° to 270°.

5. Fastening system according to claim 4, wherein the cross-section forms a circular arc with a central angle (35) of 30° to 270°, preferably 60° to 270°, in particular 90° to 180°, very specifically 120° to 180°.

6. Fastening system according to claim 4 or 5, wherein the change of the curvature of the curved plate (1) is elastic in the range of the variable curvature.

7. Fastening system according to any of claims 1 tot 6, wherein the curved plate (1) is made of spring steel.

8. Fastening system according to any of claims 1 to 7, wherein the ends (4, 5) of the curved plate (1) have a raised edge (14, 15).

9. Fastening system according to claim 8, wherein the raised edge (14, 15) at least partially encloses the clamping plate (13).

10. Fastening system according to any of claims 2 to 9, wherein the curved plate (1) and the clamping plate (13) each have a rigidity, the rigidity of the clamping plate (13) being greater than the rigidity of the curved plate (1).

11. Fastening system according to any of claims 2 to 10, wherein the first part (9) and/or the second part (8) comprises a nut (16) provided on a bolt (17) extending through the clamping plate (13) and the curved plate (1), and wherein the bolt (17) is preferably provided with an angular collar (18) that fits into an angular recess (19) in the clamping plate (13) and/or into a recess (20) in the curved plate (1).

12. Fastening system according to any of claims 1 tot 11, provided so as to extend in the dovetail groove (22) with the concave side (3) of the curved plate (1) facing a base (32) of said dovetail groove (22).

13. Method for fastening a fastening system with a spring clamp (11) in a dovetail groove (22),
wherein the spring clamp (11) includes a curved plate (1) having a concave side (2), a convex side (3), two ends (4, 5) and a curvature between said two ends (4, 5),
wherein a latch (23) is provided with a first part (9) extending on the concave side (3) of the curved plate (1) and a second part (8) extending on the convex side (2) of the curved plate (1),
wherein the spring clamp (11) is placed with the two ends (4, 5) of the curved plate (1) in the dovetail groove (22) between the two opposite standing walls (6, 7),
**characterised in that,** subsequently, the spring clamp (1) is elastically compressed by moving the first part (9) and the second part (8) of the latch (23) on either side (2, 3) of the curved plate (1) towards each other and by stressing the curved plate (1) in between, so that the curvature of the curved plate (1) is reduced and the distance (10) between the two ends (4, 5) is increased, until the two ends (4, 5) abut against the opposite standing walls (6, 7) of the dovetail groove (22) to lock the spring clamp (1) in the dovetail groove (22).

14. Method according to claim 13, wherein the spring clamp (1) is placed in the dovetail groove (22) with the concave side (3) of the curved plate (1) facing the base (32) of the dovetail groove (22) and the convex side (2) of the curved plate (1) facing the opening (30) of the dovetail groove (22), and wherein the spring clamp (1) is preferably locked in the dovetail groove (22) with the convex side (2) of the curved plate (1) against the standing walls (6, 7).

15. Method according to any of claims 13 to 14, wherein the first part (9) and the second part (8) of the latch (23) on either side (2, 3) of the curved plate (1) are moved towards each other by tightening a nut (16) of the second part (8) extending on the convex side (2) on a bolt (17) extending through the curved plate (1) at least from the first part (9) to the second part (8), wherein the nut (16) is tightened towards a clamping plate (13) of the second part (8) extending on the concave side (3) on the bolt (17).
